(19) Europäisches Patentamt
European Patent Office
Office européen des brevets

(11) **EP 3 883 870 B1**

(12) **EUROPÄISCHE PATENTSCHRIFT**

(45) Veröffentlichungstag und Bekanntmachung des Hinweises auf die Patenterteilung:
**27.03.2024   Patentblatt 2024/13**

(21) Anmeldenummer: **19805923.0**

(22) Anmeldetag: **13.11.2019**

(51) Internationale Patentklassifikation (IPC):
**B65G 47/28** *(2006.01)*       **B07C 5/34** *(2006.01)*

(52) Gemeinsame Patentklassifikation (CPC):
**B65G 47/28; B07C 5/02; B65G 47/846;**
B65G 51/03

(86) Internationale Anmeldenummer:
**PCT/EP2019/081192**

(87) Internationale Veröffentlichungsnummer:
**WO 2020/104276 (28.05.2020 Gazette 2020/22)**

(54) **VEREINZELUNGSVORRICHTUNG EINER OPTISCHEN PRÜFEINRICHTUNG**

SEPARATING DEVICE OF AN OPTICAL TESTING UNIT

DISPOSITIF DE DÉPARIEMENT D'UN APPAREIL DE CONTRÔLE OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.11.2018   DE 102018129589**

(43) Veröffentlichungstag der Anmeldung:
**29.09.2021   Patentblatt 2021/39**

(73) Patentinhaber: **INTRAVIS Gesellschaft für Lieferungen und Leistungen von bildgebenden und bildverarbeitenden Anlagen und Verfahren mbH 52068 Aachen (DE)**

(72) Erfinder:
- **FUHRMANN, Gerd 52066 Aachen (DE)**
- **SCHÖNHOFF, Klaus 52146 Würselen (DE)**
- **RICK, Michael 52064 Aachen (DE)**

(74) Vertreter: **Kohlmann, Kai Donatusstraße 1 52078 Aachen (DE)**

(56) Entgegenhaltungen:
| | |
|---|---|
| EP-A1- 1 867 592 | DE-A1- 2 913 446 |
| JP-A- H0 331 114 | US-A- 4 274 532 |
| US-A- 5 122 016 | US-A1- 2018 100 824 |

EP 3 883 870 B1

**Beschreibung**

Die Erfindung betrifft eine Vereinzelungsvorrichtung einer Prüfeinrichtung zur zerstörungsfreien physikalischen, insbesondere optischen oder elektrischen Prüfung übereinstimmender, zu einer Objektachse rotationssymmetrischer Prüfobjekte mit einer Bodenfläche, einer Deckfläche und einer sich zwischen Bodenfläche und Deckfläche erstreckenden Mantelfläche.

Bei den Prüfobjekten handelt es sich beispielsweise um Behälterverschlüsse mit einer geschlossenen Bodenfläche der eine offene Deckfläche gegenüberliegt. Es können jedoch auch Prüfobjekte vereinzelt werden, bei denen die Deck- und/oder Bodenflächen wahlweise vollständig oder teilweise offen oder geschlossen sind. Zur Qualitätssicherung der massenhaft hergestellten Behälterverschlüsse ist es aus dem Stand der Technik bekannt, fortlaufend mindestens ein Prüfkriterium der hergestellten Prüfobjekte mithilfe von optischen Prüfeinrichtungen zu untersuchen. Die Prüfkriterien werden derart gewählt, dass typische Eigenschaften und/oder auch Fehler des Prüfobjektes bei der Untersuchung festgestellt werden können. Typische Fehler von spritzgegossenen Hohlkörpern sind Dimensionsfehler, Materialfehlstellen sowie Farbfehler.

Zur optischen Prüfung der Prüfobjekte auf derartige Fehler kommen digitale Stehbildkameras zum Einsatz, die von den vereinzelten Prüfobjekten Aufnahmen anfertigen, die anschließend in einer Auswerteeinheit ausgewertet werden. Für das Aufnehmen der Bilder ist zuvor ein Vereinzeln der in einem einreihigen, geschlossenen Transportstrom geförderten Prüfobjekte erforderlich. Die der Vereinzelung vorgelagerte Staustrecke der Prüfobjekte dient zum mengen- und zeitmäßigen Ausgleich des Transportstroms der Prüfobjekte.

Aus der DE 10 2013 014 473 A1 ist eine Prüfeinrichtung zur optischen Prüfung von rotationssymmetrischen Gefäßen bekannt, bei der die Gefäße auf zwei parallel angeordneten, mit gleicher Geschwindigkeit laufenden Transportbändern aktiv durch die Prüfeinrichtung transportiert werden. Dabei ist sichergestellt, dass sich die relative Lage eines Gefäßes auf den Transportbändern nicht verändert, solange Haftreibung zwischen dem Gefäß und den Transportbändern besteht. Oberhalb der Transportbänder ist ein Sternrad mit mehreren Fingern über einen Antrieb drehbar angeordnet. Die Finger des Sternrades tauchen über die der Bodenfläche gegenüberliegende offene Deckfläche in das Gefäß ein. Durch die Regelung der Drehgeschwindigkeit des Sternrades relativ zur Vorschubgeschwindigkeit der beiden Transportbänder ist es möglich, eine Lücke variabler Größe zwischen den Gefäßen auf den beiden Transportbändern hinter dem Sternrad zu erzeugen, d.h. die Prüfobjekte zu vereinzeln.

Die von oben in die Gefäße eintauchenden Finger des Sternrades können das Gefäß in dem oberen, weniger stabilen Bereich beschädigen. Bei der Vereinzelung von Behälterverschlüssen mittels des Sternrades kann beispielsweise das empfindliche Garantieband durch die Finger des Sternrades beschädigt werden. In der Verzahnung des Garantiebandes kann sich der in den Behälterverschluss eintauchende Finger verfangen, was eine Stauung der Behälterverschlüsse stromauf des Sternrades oder deren ungleichmäßige Lage auf den Transportbändern zur Folge hat. Ferner gibt es Behälterverschlüsse mit einem angeformten, hochgeklappten Garantieband. Da wichtige Prüfkriterien des Behälterverschlusses in der Prüfeinrichtung nur mit hochgeklapptem Garantieband einer Prüfung zugänglich sind, besteht ein großes Interesse, die Verschlüsse optisch zu prüfen, bevor das Garantieband eingeklappt wird. Das hochgeklappte Garantieband stellt jedoch ein Hindernis für das Eintauchen des Sternrades da.

Für das Vereinzeln der Prüfobjekte mittels des Sternrades ist es zudem erforderlich, dass die Prüfobjekte in stets gleicher Orientierung auf den Transportbändern aufliegen, nämlich mit der Bodenfläche auf der durch das Transportband aufgespannten Transportebene. Gelangt ein Prüfobjekt indes in falscher Orientierung auf das Transportband, kann der Finger nicht über die oben offene Deckfläche in das Prüfobjekt eintauchen und auf die Halterungen des Sternrades werden hohe Kräfte ausgeübt. Die hohen Kräfte können das fehlerhaft orientierte Prüfobjekt beschädigen und führen zu einer Ausweichbewegung des beweglich gelagerten Sternrades. Aufgrund der hohen Transportgeschwindigkeit der Prüfobjekte in Transportrichtung sowie der Dauer der Rückstellung des Sternrades in die ursprüngliche Position, werden nachfolgende Prüfobjekte nicht oder nicht exakt beabstandet.

Ein weiterer Nachteil der Vereinzelung mittels der spielbehaftet in die Prüfobjekte eintauchenden Finger besteht in einer ungenauen Positionierung der Prüfobjekte. Schließlich kann das Eintauchen der Finger des Sternrades bei bestimmten Prüfobjekten aus hygienischen Gründen unerwünscht sein, beispielsweise bei Behälterverschlüssen.

Die US 4 044 891 A offenbart eine zwei Transportketten aufweisende Transporteinrichtung zum Befördern von Dosen durch eine Prüf- oder Überwachungsstation. Ein Radindexierer ist eingangs der Prüfstrecke angeordnet und weist zwei mechanisch über eine Kette gleichsinnig synchron angetriebene Sternräder auf. Im dem Fall, dass sich Dosen am Eingang der Prüf- und Überwachungseinrichtung ansammeln, hält der Radindexierer den erforderlichen Abstand zwischen den Dosen für die anschließende Prüfung aufrecht.

Aus der DE 34 27 379 A1 ist eine Vorrichtung zum Aufteilen einer Reihe von Gegenständen in zwei Reihen bekannt, die zwei einander gegenüberliegende, nicht angetriebene Räder aufweist. Der Umfang der Räder ist jeweils derart profiliert, dass die einlaufenden Gegenstände mit diesem Profil in Eingriff kommen und jeweils abwechselnd von einem der beiden aufgrund des Vorschubs der Gegenstände sich drehenden Rädern mitgenommen und nach rechts bzw. links aus ihrer Vorschubrichtung abgelenkt werden. Die derart abgelenkten Gegenstände werden in zwei getrennte Auslaufkanäle eingeführt. Weil die beiden Räder frei drehbar gelagert und nicht angetrieben sind, kommt es auch bei einem Stillstand der Fördervorrichtung zu keiner Beschädigung; werden keine Gegenstände angeliefert oder stauen sich die Gegenstände auf der Ausgangsseite, bleiben die beiden Räder einfach stehen.

Die US 4 274 532 A offenbart eine Vorrichtung nach dem Oberbegriff des Anspruchs 1 zum Vereinzeln von Getränkedosen in einer Beladestation. Die Vorrichtung umfasst gegenläufig rotierende Taschenräder und eine Stetig-Förderanlage in Form eines Endlosbandes auf der Dosenträger mit einer zylindrischen Basis in einer Staustrecke in Richtung der Taschenräder bewegt werden. Die Dosen werden von einem Stiftkettenförderer mittels eines Vakuumüberträgers auf die Dosenträger übertragen. Die Dosenträger werden in der Vorrichtung ständig im Kreis gefördert und gelangen aus einem Sammelförderer lückenlos auf das Endlosband im Bereich des Vakuumüberträgers. Die zylindrische Basis jedes Dosenträgers hat einen Durchmesser, der dem Abstand zwischen den Stiften des Stiftkettenförderers entspricht. Das Oberflächenmaterial des Endlosbandes besteht aus einem Material, das eine Relativbewegung zu den Dosenträgern erlaubt. Die gegenüber dem Stiftkettenförderer um etwa 10% höhere Geschwindigkeit des Endlosbandes bewirkt, dass sich vor den Taschenrädern ein lückenloser Stau der Dosenträger ausbildet und die Dosen hinter den beiden Taschenrädern im Abstand zu einer nachgeordneten Markiereinheit gefördert werden. Die Taschenräder gelangen an der zylindrischen Basis der Dosenträger zur Anlage gelangen, nicht jedoch an der Mantelfläche der Dose selbst.

Die US 2018/100824 A1 offenbart eine Vorrichtung zum Testen von Kappen. Die Vorrichtung umfasst als Hauptkomponenten eine Zufuhrschiene, einen als Schnecke ausgeführten Objektempfänger, eine Transportvorrichtung und zwei gegenüberliegend angeordnete, angetrieben Funkenprüfräder sowie eine Funkenprüfschaltung und eine Steuerung. Die zu prüfenden Kappen werden auf der Zufuhrschiene mit einem Luftstrom bewegt, wobei die Kappen lückenlos nacheinander positioniert sind, um eine einzelne Reihe von gegeneinander gepressten Kappen zu erzeugen. Die Zufuhrschiene weist Seitenwände auf, die niedriger als die Oberseiten der Kappen sind, damit das Gewinde einer Schnecke in die Kappen eingreifen kann, während sie an den Seiten geführt werden. Die Steigung des Gewindes ist etwas größer als der Durchmesser der Kappen und die Dicke des Gewindes ermöglicht eine räumliche Trennung der Kappen. Die Zufuhrschiene ist so angeordnet, dass sie den Eingang der Transportvorrichtung speist, wodurch die beabstandeten Kappen sanft von der Zufuhrschiene auf die Transportvorrichtung übertragen werden. Die Transportvorrichtung empfängt die beabstandeten Kappen in der durch die Schnecke vorgegebenen Position. Die Konfiguration ermöglicht eine Funkenprüfung bei hoher Geschwindigkeit, wobei der Finger des Funkenprüfrades nur mit der Innenseite der Bodenwand der zu testenden Kappe in Kontakt gelangen. Das gegenüberliegende Funkenprüfrad ist derart konfiguriert, dass eine gegenüberliegende Elektrode direkt unter dem Finger angeordnet ist, wenn eine Kappe geprüft wird.

Ausgehend von der US 4 274 532 A als nächstliegendem Stand der Technik liegt der Erfindung die Aufgabe zugrunde, eine Vereinzelungsvorrichtung einer Prüfeinrichtung der eingangs erwähnten Art zu schaffen, die Lücken in dem Transportstrom der Prüfobjekte in der Staustrecke toleriert und zugleich die Aufrechterhaltung einer ungestörten Staustrecke zumindest unmittelbar vor der Eingriffsstrecke gewährleistet, ohne dass die Fördermittel der Stetig-Förderanlage angehalten werden müssen.

Diese Aufgabe wird durch eine Vereinzelungsvorrichtung mit den Merkmalen des Anspruchs 1 gelöst. Vorteilhafte Ausgestaltungen der Erfindung ergeben sich aus den Merkmalen der Unteransprüche.

Die Lösung der Aufgabe sieht zwei vorzugsweise übereinstimmende, d.h. baugleiche Taschenräder mit mehreren gleichmäßig über den Umfang verteilten Taschen vor. Die beiden Taschenräder werden über einen Antrieb in eine gegensinnige, synchrone Drehung um vorzugsweise parallele Achsen versetzt. Zwischen den beiden Taschenrädern erstreckt sich in der Transportebene der Stetig-Förderanlage eine Eingriffsstrecke, in der die Mantelfläche jedes Prüfobjekts an jeweils einer Tasche der beiden Taschenräder zur Anlage gelangt. Die Krafteinleitung bei der Vereinzelung erfolgt nicht im Bereich des empfindlichen oberen Randes des Prüfobjekts, sondern über die rotationssymmetrische, stabile Mantelfläche, vorzugsweise in der Nähe von deren Bodenfläche, mit der jedes Prüfobjekt bei korrekter Orientierung auf der Transportebene der Stetig-Förderanlage aufliegt.

Abhängig vom Durchmesser und der Höhe der Mantelfläche der Prüfobjekte muss der Abstand der Taschenräder zueinander und zu der Transportebene derart bestimmt sein, dass die einzelnen Prüfobjekte jeweils von zwei Taschen der beiden Taschenräder formschlüssig geführt durch die Eingriffsstrecke hindurch bewegt und stromab der Eingriffsstrecke von den beiden Taschen freigegeben werden.

Die Prüfeinrichtung verfügt über eine Steuerung zur Einstellung der Umdrehungsgeschwindigkeit der beiden Taschenräder relativ zur Geschwindigkeit jedes Fördermittels der Stetig-Förderanlage derart, dass die Transportgeschwindigkeit der Prüfobjekte in der Stau - und Eingriffstrecke geringer als die Transportgeschwindigkeit der Prüfobjekte in der Beschleunigungs - und Transportstrecke ist. Nach dem Verlassen der Eingriffsstrecke beschleunigen die Prüfobjekte in der Beschleunigungsstrecke auf die höhere Transportgeschwindigkeit in der sich an die Beschleunigungsstrecke anschließenden Transportstrecke. Nach der Beschleunigung bewegen sich die Prüfobjekte in der Transportstrecke mit der Geschwindigkeit des Fördermittels der Stetig-Förderanlage, auf das die Prüfobjekte stromab der Eingriffsstrecke von den beiden Taschenrädern übergeben werden.

Erfindungsgemäß ist die Steuerung zur Einstellung der Umdrehungsgeschwindigkeit der Taschenräder relativ zur Geschwindigkeit jedes Fördermittels der Stetig-Förderanlage Bestandteil eines Regelkreises, der die Aufrechterhaltung einer ungestörten Staustrecke zumindest unmittelbar vor der Eingriffstrecke gewährleistet, so dass dort stets Prüfobjekte einreihig an ihren Mantelflächen aneinander anliegen.

Die Staustrecke wird mittels eines Sensors auf Lücken in dem Transportstrom der Prüfobjekte überwacht. Etwaige Lücken könnten dazu führen, dass die Prüfobjekte von den Taschen der beiden Taschenräder in der Eingriffstrecke nicht korrekt aufgenommen werden, sondern die zahnartigen Übergänge zwischen den Taschen auf die Mantelflächen nachfolgender Prüfobjekte in der gestörten Staustrecke auftreffen und diese beschädigen. Wird eine Lücke detektiert, reduziert die Regelung als Gegenmaßnahme die Umdrehungsgeschwindigkeit der Taschenräder mittels der Steuerung, damit sich die Lücke wieder schließt.

Die Stetig-Förderanlage kann ein Fördermittel oder mehrere in Transportrichtung hintereinander angeordnete Fördermittel aufweisen. Vorzugsweise weist die Stetig-Förderanlage einen Bandförderer und einen Strömungsförderer auf.

In der Transportebene des Bandförderers sind in Transportrichtung hintereinander zumindest die Beschleunigungsstrecke und die Transportstrecke angeordnet. Vorzugsweise sind in der Transportebene des Bandförderers in Transportrichtung hintereinander zumindest ein Teil der Staustrecke, die Eingriffstrecke, die Beschleunigungsstrecke und die Transportstrecke angeordnet. Diese Anordnung erlaubt die Integration der Vereinzelung in den für die Prüfeinrichtung im Bereich der digitalen Kameras vorgesehenen Bandförder und die Anbindung des Bandförderers an ein weiteres Fördermittel, beispielsweise eines vorgelagerten Sortierers für die Prüfobjekte. Hierdurch kann eine modulare Trennung der einzelnen Baugruppen der Prüfeinrichtung erreicht werden.

Die korrekt orientierten Prüfobjekte werden aus dem Sortierer insbesondere mittels Druckluft ausgefördert. Die Stetig-Förderanlage kann daher zusätzlich einen Strömungsförderer aufweisen, wobei sich in der Transportebene des Strömungsförderers der weitere Teil der Staustrecke befindet.

Grundsätzlich ist es jedoch auch möglich, dass in der Transportebene des Strömungsförderers in Transportrichtung hintereinander zumindest die Staustrecke und die Eingriffstrecke angeordnet sind. In diesem Fall übernimmt der Bandförderer die Prüfobjekte erst hinter der Eingriffstrecke. In der Staustrecke und der Eingriffstrecke gleiten die Prüfobjekte auf einer die Transportebene bildenden Gleitoberfläche.

Der Bandförder weist vorzugsweise zwei parallel zueinander mit gleicher Geschwindigkeit umlaufende Transportbänder, ein sogenanntes Doppelspurband, auf. Die Oberfläche jedes Transportbandes des Bandförderers überträgt die Antriebskräfte mittels Reibung auf die Bodenfläche der Prüfobjekte. Soweit der Bandförder einen Teil der Staustrecke bildet, sind die Reibwerte derart abzustimmen, dass die gestauten Prüfobjekte in der Staustrecke beschädigungslos über die Oberfläche jedes Transportbandes gleiten können.

Der Bandförderer kann jedoch auch lediglich ein Transportband, Rundriemen oder andere umlaufende Tragmittel aufweisen, die geeignet sind, mittels Reibkräften die Antriebskräfte auf die Prüfobjekte zu übertragen. Die Ausführung als Doppelspurband erlaubt es jedoch auf besonders einfache Art und Weise, den Bandförderer zumindest abschnittsweise als Vakuumbandförderer auszubilden. Zwischen einem Ober- und Untertrum des Doppelspurbandes des Bandförderers ist ein Vakuumkanal angeordnet, der einen Längsschlitz aufweist, der in dem Zwischenraum zwischen dem Doppelspur-Band im Obertrum mündet und den Anpressdruck der Prüfobjekte auf die Oberfläche jedes Transportbands erhöht.

Durch den erhöhten Anpressdruck wird der Schlupf zwischen der Oberfläche jedes Transportbands und den Prüfobjekten und damit die Beschleunigungstrecke verkürzt. Die Verkürzung trägt zu einer geringeren Baulänge der Prüfeinrichtung bei.

Außerdem stabilisiert das Vakuum die Lage der Prüfobjekte auf jedem Transportband des Bandförderers in der Transportstrecke, die bei den geforderten hohen Geschwindigkeiten von bis zu 100 Prüfobjekten je Sekunde alleine durch die Schwerkraft nicht stets gewährleistet ist.

Zum einreihigen Transportieren der Prüfobjekte in einer Transportrichtung mittels der Stetig-Förderanlage sind vorzugsweise in Transportrichtung verlaufende Seitenführungen parallel zueinander oberhalb der Transportebene derart angeordnet, dass die Seitenführungen jedes Prüfobjekt an gegenüberliegenden Seiten der Mantelfläche führen. Die Seitenführungen in der Staustrecke verhindern, dass durch den Staudruck einzelne Prüfobjekte aus dem einreihigen Förderstrom ausweichen. Die Seitenführungen erstrecken sich zumindest entlang der Staustrecke, vorzugsweise jedoch über die Eingriffstrecke bis in die Beschleunigungstrecke hinein.

Um die Vereinzelungsvorrichtung mit geringem Aufwand an Prüfobjekte mit unterschiedlichem Durchmesser anpassen zu können, ist in vorteilhafter Ausgestaltung der Erfindung der Abstand zwischen den Seitenführungen einstellbar.

Um Kippmomenten der Prüfobjekte in der Beschleunigungsstrecke, der Eingriffsstrecke sowie Teilen der Staustrecke entgegenzuwirken, ist in vorteilhafter Ausgestaltung der Erfindung oberhalb der Transportebene des Stetig-Förderers eine Überkopfführung derart angeordnet, dass die Überkopfführung die Deckfläche jedes Prüfobjekts führt. Verantwortlich für Kippmomente in der Stau- und Eingriffsstrecke ist die Bandgeschwindigkeit des Bandförderers, die höher ist als die Geschwindigkeit der Prüfobjekte in der Stau - und Eingriffstrecke. Auch in der Beschleunigungsstrecke wirkt auf die Prüfobjekte unverändert ein Kippmoment aufgrund der Massenträgheit während der Beschleunigung. Die Überkopfführung erstreckt sich daher vorzugsweise nicht nur über einen Teil der Staustrecke, sondern auch entlang der Eingriffstrecke und ausgehend von der Eingriffstrecke zumindest teilweise entlang der Beschleunigungsstrecke.

Um die Überkopfführung an unterschiedlich hohe Prüfobjekte anzupassen, ist der Abstand zwischen der Überkopfführung und der Transportebene einstellbar. Um sowohl die Seitenals auch Überkopfführungen einzustellen, können Halterungen mit unterschiedlichen Befestigungspositionen für lösbare Verbindungen zwischen den Führungen und Halterungen vorgesehen sein. Alternativ können die Seiten- und Überkopfführungen an arretierbaren Linearführungen befestigt sein, die eine manuelle oder automatische Einstellung des Abstandes erlauben.

Sämtliche Taschen beider Taschenräder werden durch einfach gekrümmte Flächen mit übereinstimmender Krümmung begrenzt. Die Mantelfläche jedes Prüfobjekts gelangt an der gekrümmten Fläche jeweils einer Tasche der beiden Taschenräder eingangs der Eingriffsstrecke zur Anlage, wodurch der Rückstau in der Staustrecke entsteht. Während des weiteren Transports jedes Prüfobjekts in der Staustrecke bilden die beiden Taschen zusammen ein Nest, in dem das Prüfobjekt eingeschlossen von den beiden Taschen durch die Eingriffstrecke hindurch bewegt wird, bevor die Taschen das Prüfobjekt am Ende der Eingriffsstrecke wieder freigegeben. Dort gelangt jedes Prüfobjekt auf das Doppelspurband des Bandförderers und wird in der sich anschließenden Beschleunigungsstrecke auf die Geschwindigkeit des Bandförderers beschleunigt.

Die Übergänge zwischen benachbarten Taschen der Taschenräder sind vorzugsweise gerundet ausgebildet. Die Abrundung führt zu einer Reduktion der Höhe der Zähne zwischen benachbarten Taschen und bewirkt, dass die Taschenräder die Prüfobjekte in der Staustrecke nicht entgegen der Transportrichtung zurückdrücken, wenn das in der Staustrecke vordere Prüfobjekt erstmals mit den Taschen der beiden Taschenräder in Berührung gelangt.

Die Taschenräder werden vorzugsweise unmittelbar oberhalb der Transportebene angeordnet, sodass jedes Prüfobjekt nahe der Bodenfläche an den Taschen zur Anlage gelangt. In diesem Bereich sind die Prüfobjekte besonders stabil und unempfindlich gegen Beschädigungen. Die Stärke der Taschenräder wird derart gewählt, dass die Seitenführungen oberhalb der Taschenräder Platz finden.

Der Antrieb, der die Taschenräder in eine gegensinnige, synchrone Drehung um die vorzugsweise parallelen Achsen versetzt, umfasst vorzugsweise einen Servomotor. Der Servomotor erlaubt eine genaue Steuerung der Position der Taschenräder. Desweiteren gewährleistet der Servomotor eine gleichbleibende Drehgeschwindigkeit der Taschenräder auch, wenn sich der Staudruck in der Staustrecke ändert. Außerdem kann der Servomotor eine Momentenbegrenzung aufweisen, sofern der Staudruck innerhalb der Staustrecke unzulässig hohe Werte annimmt. Schließlich ermöglicht ein Servomotor eine Steuerung von Geschwindigkeitsprofilen, die für das kontrollierte Anfahren der Prüfeinrichtung erforderlich ist. Insbesondere wirkt sich der Servomotor vorteilhaft aus, wenn die Vereinzelungsvorrichtung mit einem Regelkreis mit den Merkmalen des Anspruchs 18 ausgestattet ist.

Der Antrieb kann beispielsweise zwei um die parallelen Achsen drehbare Antriebswellen für die beiden Taschenräder aufweisen, die an dem den Taschenrädern gegenüberliegenden Ende jeweils mit einem Zahnrad drehfest verbunden sind.

Die Abtriebswelle des Servomotors weist ein Antriebszahnrad auf. Die Kraftübertragung erfolgt über einen Zahnriemen, der über das Antriebszahnrad die beiden mit den Wellen verbundenen Zahnräder sowie eine zwischen den beiden Zahnrädern angeordnete Umlenkrolle geführt ist. Abweichend zu dem zuvor beschriebenen Antriebskonzept mit einem Servomotor zum Antreiben beider Taschenräder können jedoch auch zwei Servomotoren vorgesehen sein, die die Taschenräder synchron gegensinnig antreiben.

Um in den Grenzen der Taschengeometrie Prüfobjekte mit unterschiedlichen Durchmessern entlang der Eingriffsstrecke transportieren zu können, ohne Taschenräder mit verändertem Durchmesser einbauen zu müssen, ist in einer Ausgestaltung der Erfindung vorgesehen, dass der Abstand der Achsen der Taschenräder einstellbar ist. Hierzu können die Lagerungen der Antriebswellen für die Taschenräder verschieblich gelagert sein.

Die Umdrehungsgeschwindigkeit der Taschenräder wird mittels der Steuerung derart eingestellt, dass zwischen 10 - 100 Prüfobjekte je Sekunde, typischerweise etwa 60 Prüfobjekte je Sekunde, die Eingriffsstrecke verlassen. Über die Anzahl der Taschen (N) in den Taschenrädern und den Abstand (R) der Objektachse des Prüfobjekts zur Drehachse des Taschenrads lässt sich die Umfanggeschwindigkeit (U) und auch die notwendige Rotationsgeschwindigkeit (ω) berechnen.

$$U = \omega \cdot 2R \cdot \pi$$

ω = Rotationsgeschwindigkeit in 1/s
U = Umfangsgeschwindigkeit in m/s
R = Abstand Objektachse-Drehachse des Taschenrades in m
n = Anzahl der Prüfobjekte/s

Abhängig von der Umfangsgeschwindigkeit (U) stellt die Steuerung eine Geschwindigkeit des Bandförderers ein, die größer als die Umfangsgeschwindigkeit ist. Soweit zusätzlich ein Strömungsförderer vorhanden ist, wird die Geschwindigkeit des Strömungsmediums derart gesteuert, dass die Transportgeschwindigkeit der Prüfobjekte in der Staustrecke ohne die stauenden Taschenräder größer als die Umfangsgeschwindigkeit ist.

Die Geschwindigkeitsdifferenz zwischen der Umfangsgeschwindigkeit (U), die der Transportgeschwindigkeit der Prüfobjekte ($v_A$) in der Staustrecke entspricht, und der Geschwindigkeit des Bandförderers ($v_B$) bestimmt den Abstand (D) zwischen den Prüfobjekten nach der Vereinzelung:

$$n = v_A / A = v_B / B \quad mit \ v_A = U$$

D = Abstand zwischen Prüfobjekten in m, mit D = B - A
U = Umfangsgeschwindigkeit in m/s
n = Anzahl der Prüfobjekte/s
$v_A$ = Transportgeschwindigkeit Prüfobjekte in Staustrecke in m/s
$v_B$ = Geschwindigkeit Bandförderer in m/s

Der Regelkreis hält vorzugsweise die Geschwindigkeitsdifferenz zwischen der Umdrehungsgeschwindigkeit der Taschenräder und der daraus resultierenden Umfangsgeschwindigkeit (U) und der Geschwindigkeit des Bandförderers konstant, so dass sich der Abstand (D) zwischen den Prüfobjekten nach der Vereinzelung trotz der Reduktion der Umdrehungsgeschwindigkeit der Taschenräder nicht ändert.

Ein konstanter Abstand (D) lässt sich durch ein festes Verhältnis der Transportgeschwindigkeit $v_A$ der Prüfobjekte in der Staustrecke und der Geschwindigkeit des Bandförderer $v_B$ erreichen:

$$D = A * (v_B/v_A - 1) \ mit \ v_A = U$$

mit

D = Abstand zwischen Prüfobjekten in m
U = Umfangsgeschwindigkeit in m/s
$v_A$ = Transportgeschwindigkeit Prüfobjekte in Staustrecke in m/s
$v_B$ = Geschwindigkeit Bandförderer in m/s
A = Durchmesser Prüfobjekt (Verschlusskappe) in m

Die Einhaltung des konstanten Abstands (D) durch ein festes Verhältnis der Transportgeschwindigkeit $v_A$ der Prüfobjekte in der Staustrecke und der Geschwindigkeit des Bandförderer $v_B$ wird vorzugsweise ebenfalls von dem die Steuerung zur Einstellung der Umdrehungsgeschwindigkeit der Taschenräder (3.1, 3.2) relativ zur Geschwindigkeit jedes Fördermittels der Stetig-Förderanlage (2) umfassenden Regelkreis bewirkt.

Nachfolgend wird die Erfindung anhand der Zeichnungen näher erläutert. Es zeigen

**Fig. 1a** eine Seitenansicht einer Vereinzelungsvorrichtung ohne Antrieb,

**Fig. 1b** eine perspektivische Ansicht der Vereinzelungsvorrichtung nach Fig. 1a mit transparenter Darstellung der Führungselemente,

**Fig. 1c** eine Darstellung entsprechend Fig. 1b mit Führungselementen,

**Fig. 1d** eine Darstellung entsprechend Fig. 1b mit entfernten Führungselementen,

**Fig. 2** eine Aufsicht auf die Vereinzelungsvorrichtung nach Fig. 1c und

**Fig. 3** eine perspektivische Darstellung der Vereinzelungsvorrichtung mit Antrieb.

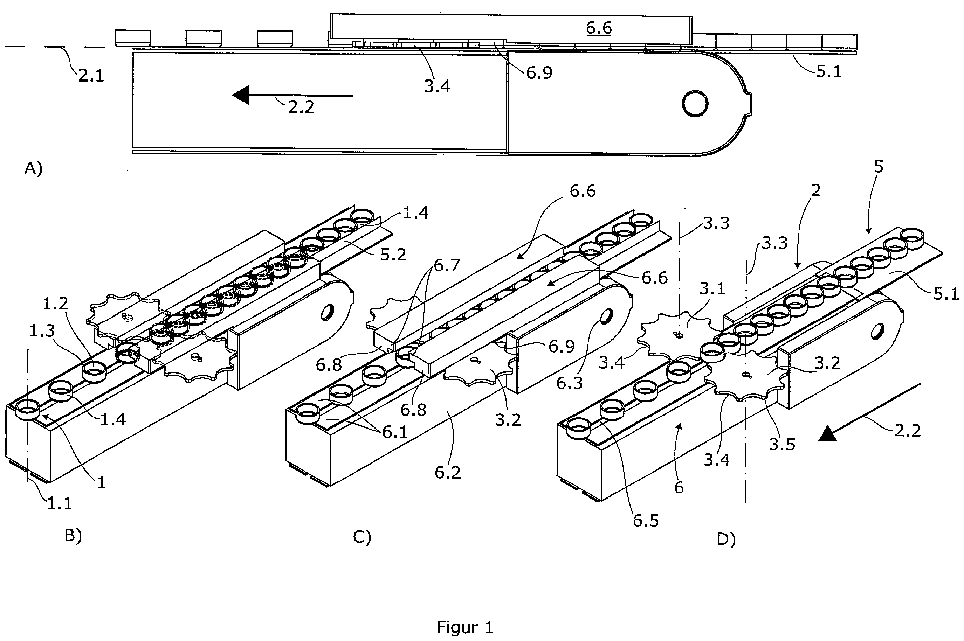

Die Vereinzelungsvorrichtung ist Bestandteil einer der Übersichtlichkeit halber nicht vollständig dargestellten Prüfeinrichtung zur optischen Prüfung übereinstimmender, zu einer Objektachse (1.1) rotationssymmetrischer Prüfobjekte (1). Bei den Prüfobjekten (1) handelt es sich beispielsweise um Verschlusskappen für Getränkebehälter. Die zu einer Objektachse (1.1) rotationssymmetrischen Prüfobjekte stimmen sämtlich überein. Sie weisen eine Bodenfläche (1.2), eine durch den oberen Rand des Prüfobjektes begrenzte Deckfläche (1.3) sowie eine sich zwischen der Bodenfläche (1.2) und der Deckfläche (1.3) erstreckende Mantelfläche (1.4) auf. Die Vereinzelungsvorrichtung umfasst eine Stetig-Förderanlage (2) mit einer Transportebene (2.1) (vgl. Fig. 1a). In der Transportebene (2.1) werden die Prüfobjekte (1) einreihig in einer Transportrichtung (2.2) transportiert.

Die Vereinzelungsvorrichtung verfügt weiter über zwei übereinstimmende Taschenräder (3.1, 3.2), die um senkrecht zu der Transportebene (2.1) verlaufende Achsen (3.3) drehbar sind. Die Taschenräder (3.1, 3.2) weisen in dem dargestellten Ausführungsbeispiel zehn gleichmäßig über den Umfang verteilte Taschen (3.4) auf. Sämtliche Taschen (3.4) der beiden Taschenräder (3.1, 3.2) werden durch einfach gekrümmte Flächen mit übereinstimmender Krümmung begrenzt. Die zahnartigen Übergänge (3.5) zwischen benachbarten Taschen (3.4) sind stark gerundet.

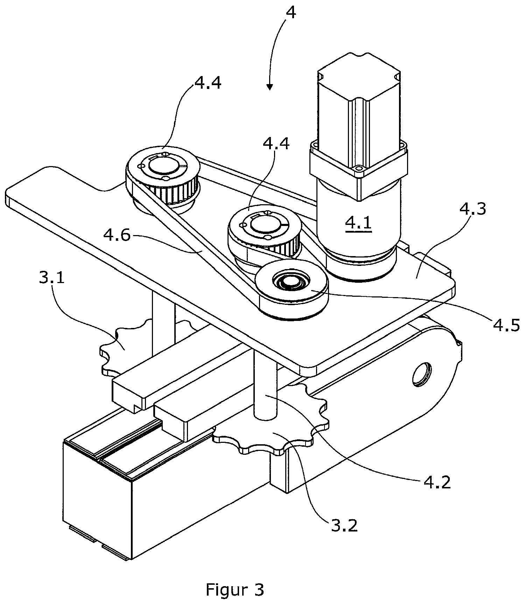

Ein Antrieb (4), der die Taschenräder (3.1, 3.2) in eine gegensinnige, synchrone Drehung um die parallelen Achsen (3.3) versetzt, ist in Fig. 3 dargestellt. Der Antrieb (4) umfasst einen Servomotor (4.1) mit einem Antriebsritzel. Mit den Taschenrädern (3.1, 3.2) sind drehfest Antriebswellen (4.2) verbunden, die in einer Tragkonstruktion (4.3) gelagert und an den den Taschenrädern (3.1, 3.2) gegenüberliegenden Enden jeweils mit einem Zahnrad (4.4) verbunden sind. Ferner ist an der Tragkonstruktion (4.3) eine verzahnte Umlenkrolle (4.5) drehbar gelagert. Das Antriebsritzel des Servomotors (4.1) treibt über einen Zahnriemen (4.6) die Zahnräder (4.4, 4.5) an, die die Antriebswellen (4.2) und damit die Taschenräder (3.1, 3.2) in eine gegensinnige, synchrone Drehung um die parallelen Achsen (3.3, 3.4) versetzen.

Die Stetig-Förderanlage (2) der Vereinzelungsvorrichtung weist im dargestellten Ausführungsbeispiel eingangsseitig einen Strömungsförderer (5) auf, der die Prüfobjekte (1) an einen Bandförderer (6) übergibt. Der Strömungsförderer (5) fördert die Prüfobjekte mittels einer Luftströmung auf einem Gleitblech (5.1) in Transportrichtung (2.2). In Transportrichtung (2.2) sind parallel zueinander verlaufende Seitenführungen (5.2) oberhalb der Transportebene (2.1) derart angeordnet, dass die Seitenführungen (5.2) jedes Prüfobjekt (1) an gegenüberliegenden Seiten der Mantelfläche (1.4) führen. Der Strömungsförderer (5) bindet die Vereinzelungsvorrichtung an eine vorgelagerte, nicht dargestellt Sortiervorrichtung an, in der die Prüfobjekte mittels einer Luftströmung transportiert werden.

Von dem Strömungsförderer (5) werden die Prüfobjekte auf einen Bandförderer (6) übergeben, der im dargestellten Ausführungsbeispiel ein umlaufendes Doppelspurband (6.1) aufweist. Der Bandförderer (6) umfasst eine Tragkonstruktion (6.2), eine Antriebsstation (6.3) sowie eine der Übersichtlichkeit halber nicht dargestellte Umlenkstation für die beiden Transportbänder des Doppelspurbandes (6.1). Der Obertrum der beiden Transportbänder des Doppelspurbandes (6.1) bildet zusammen mit dem Gleitblech (5.1) des Strömungsförderers (5) die Transportebene (2.1) der Stetig-Förderanlage (2). Die Tragkonstruktion (6.2) ist als geschlossener Kanal ausgeführt, in dem ein Unterdruck herrscht. Über einen Längsschlitz (6.5) wirkt der Unterdruck auf die Bodenflächen (1.2) der Prüfobjekte (1).

Im Bereich des Transportbandförderers (6) erstrecken sich in Transportrichtung (2.2) oberhalb der Transportebene (2.1) zwei Führungsprofile (6.6). Die Führungsprofile (6.6) weisen jeweils einen horizontalen und einen vertikalen Abschnitt auf, wobei die beiden horizontalen Abschnitte eine Überkopfführung (6.7) und die beiden vertikalen Abschnitte die Seitenführungen (6.8) für den Bandförderer bilden. Die Höhe der Führungsprofile (6.6) und deren Abstand zueinander wird derart bestimmt, dass die Seitenführungen (6.8) jedes Prüfobjekt (1) an gegenüberliegenden Seiten der Mantelfläche (1.4) führen und die Überkopfführung (6.7) die Deckfläche (1.3) jedes Prüfobjekts (1) führt.

Wie insbesondere aus Fig. 1a, 1b und 1c erkennbar, weisen die beiden Führungsprofile (6.6) im Bereich der Taschenräder (3.1, 3.2) jeweils einen Einschnitt (6.9) auf, durch den sich die Taschenräder (3.1, 3.2) in Richtung der Transportebene (2.1) erstrecken.

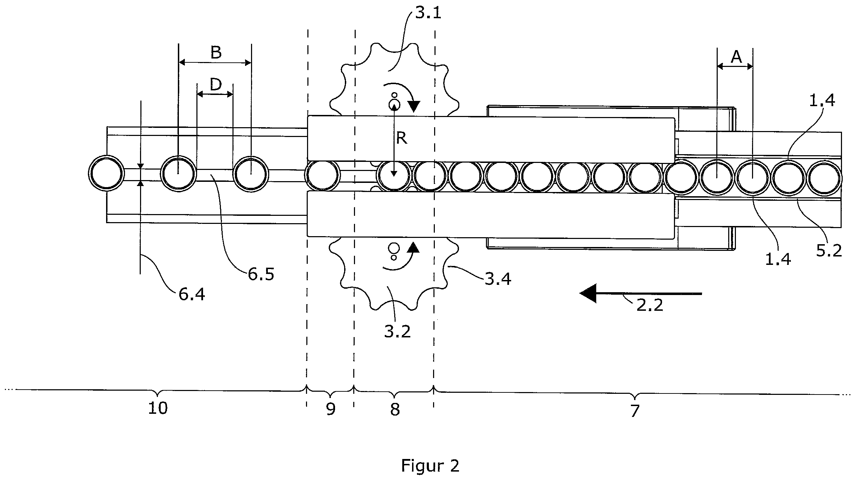

In der Aufsicht nach Fig. 2 ist erkennbar, dass in der Transportebene (2.1) des Strömungsförderers (5) und des Bandförderers (6) in Transportrichtung (2.2) hintereinander eine Staustrecke (7), eine Eingriffsstrecke (8), eine Beschleunigungsstrecke (9) und eine Transportstrecke (10) angeordnet sind. Die Stau- und Transportstrecke (9, 10) sind nicht vollständig dargestellt.

In der Staustrecke (7) liegen die Prüfobjekte (1) einreihig an ihren Mantelflächen (1.4) aneinander an. Der Abstand (A) zwischen den Objektachsen (1.1) der Prüfobjekte (1) stimmt überein. Die Staustrecke (7) dient zum mengen- und zeitmäßigen Ausgleich des Transportstroms der Prüfobjekte (1) zwischen dem Sortierer und der optischen Prüfung, der eine konstante Anzahl der Prüfobjekte je Zeiteinheit, beispielsweise 60 Prüfobjekte je Sekunde, mit einem gleichmäßigen Abstand (A) zugeführt werden muss. Über die Staustrecke (7) werden die Prüfobjekte (1) lückenlos den beiden Taschenrädern (3.1, 3.2) zugeführt. Der Abstand zwischen den parallelen Achsen (3.3) der Taschenräder (3.1, 3.2) und der vertikale Abstand der Taschenräder (3.1, 3.2) zu der Transportebene (2.1.) ist derart bestimmt, dass die Mantelfläche (1.4) jedes Prüfobjekts (1) an jeweils einer Tasche (3.4) der beiden Taschenräder (3.1, 3.2) in der Eingriffsstrecke (8) zur Anlage gelangt. In Fig. 1d ist erkennbar, wie die beiden zusammenwirkenden Taschen (3.4) der beiden Taschenräder (3.1, 3.2) im Verlauf der weiteren Drehung ein das Prüfobjekt (1) an der Mantelfläche (1.4) umfassendes Nest bilden und das Prüfobjekt (1) durch die Eingriffsstrecke (8) transportieren und dieses am Ende der Eingriffstrecke freigeben.

Die Vereinzelungsvorrichtung verfügt über eine nicht dargestellte Steuerung zur Einstellung der Umdrehungsgeschwindigkeit der Taschenräder (3.1, 3.2) relativ zur Geschwindigkeit ($v_B$) des Bandförderers (6) derart, dass die Transportgeschwindigkeit ($v_A$) der Prüfobjekte (1) in der Stau- und Eingriffsstrecke (7, 8) geringer als die Geschwindigkeit ($v_B$) des Bandförderers (6) ist, die der Transportgeschwindigkeit der Prüfobjekte (1) in der Transportstrecke (10) entspricht. Die Transportgeschwindigkeit ($v_A$) der Prüfobjekte (1) in der Stau- und Eingriffsstrecke (7, 8) entspricht der sich aus der Umdrehungsgeschwindigkeit der Taschenräder (3.1, 3.2) ergebenden Umfangsgeschwindigkeit (U) jedes Prüfobjekts (1). In dem dargestellten Ausführungsbeispiel wird die Umdrehungsgeschwindigkeit der Taschenräder mittels des Antriebs (4) und die Geschwindigkeit des Bandförderers (6) mit der Antriebsstation (6.3) gesteuert.

Sowohl die Luftströmung des Strömungsförderers (5) als auch die über das Doppelspurband (6.1) des Bandförderers (6) auf die Bodenflächen (1.2) der Prüfobjekte (1) ausgeübten Reibkräfte erzeugen in der Staustrecke (7) einen Staudruck. Die sich mit gesteuerter Umdrehungsgeschwindigkeit drehenden Taschenräder (3.1, 3.2) hindern die Prüfobjekte (1) in der Staustrecke (7) und der Eingriffstrecke (8) an einem ungehinderten Transport mit der höheren Geschwindigkeit des Bandförderers und der Luftströmung, bis diese aufgrund der Drehung der Taschenräder (3.1, 3.2) am Ende der Eingriffsstrecke (8) freigegeben und in der Beschleunigungsstrecke (9) auf die Geschwindigkeit ($v_B$) des Bandförderers (6) beschleunigt werden.

Die Anzahl (n) der je Zeiteinheit vereinzelten Prüfobjekte hängt von der Anzahl der Taschen in den Taschenrädern (3.1, 3.2) sowie der Umdrehungsgeschwindigkeit der Taschenräder ab. Der Abstand (B) zwischen den Prüfobjekten (1) nach dem Vereinzeln hängt indes von dem Geschwindigkeitsunterschied der Transportgeschwindigkeit ($v_A$) in der Staustrecke (7) und der Geschwindigkeit ($v_B$) des Bandförderers in der Transportstrecke ab.

Um die Position der Prüfobjekte (1) auf der Transportstrecke (10) zu stabilisieren und die Beschleunigungsstrecke (9) zu verkürzen, erstreckt sich der Längsschlitz (6.5), über den ein Vakuum auf die Bodenfläche (1.2) der Prüfobjekte (1) wirkt, von der Eingriffstrecke (8) über die Beschleunigungsstrecke (9) zur Transportstrecke (10). In der Staustrecke (7) ist indes kein Vakuum wirksam, weil es das Stauen der Prüfobjekte beeinträchtigen würde. Auf die Wirkung des Vakuums kann auch in der Eingriffstrecke (8) verzichtet werden. Die Vakuumunterstützung ist bei Prüfobjekten mit geschlossener oder zumindest teilweise geschlossener Bodenfläche sinnvoll.

Die Oberfläche des Doppelspurbandes (6.1) des Bandförderers (6) weist einen für die Anforderung einer Staustrecke (7) angepassten Reibbeiwert auf, der es den Prüfobjekten (1) in der Staustrecke erlaubt, über die Oberfläche rutschen zu können.

Nach der Erfindung wird die Staustrecke (7) mittels eines Sensors auf etwaige Lücken in dem Transportstrom überwacht. Etwaige Lücken können dazu führen, dass die Prüfobjekte von den Taschen (3.4) der beiden Taschenräder (3.1, 3.2) nicht korrekt aufgenommen werden, sondern die Übergänge (3.5) auf die Mantelflächen (1.4) nachfolgender Prüfobjekte (1) auftreffen. Wird eine Lücke detektiert, wird als Gegenmaßnahme die Drehgeschwindigkeit der Taschenräder (3.1, 3.2) reduziert, damit sich die Lücke wieder schließt.

| Nr. | Bezeichnung |
|-----|-------------|
| 1 | Prüfobjekte |
| 1.1 | Objektachse |
| 1.2 | Bodenfläche |
| 1.3 | Deckfläche |
| 1.4 | Mantelfläche |
| 2 | Stetig-Förderanlage |
| 2.1 | Transportebene |
| 2.2 | Transportrichtung |
| 3.1 | Taschenrad |
| 3.2 | Taschenrad |
| 3.3 | Achse |
| 3.4 | Tasche |
| 3.5 | Übergänge |
| 4. | Antrieb |
| 4.1 | Servomotor |
| 4.2 | Antriebswellen |
| 4.3 | Tragkonstruktion |
| 4.4 | Zahnrad |
| 4.5 | Umlenkrolle |

(fortgesetzt)

| Nr. | Bezeichnung |
|-----|-------------|
| 4.6 | Zahnriemen |
| 5 | Strömungsförderer |
| 5.1 | Gleitblech |
| 5.2 | Seitenführung |
| 6 | Bandförderer |
| 6.1 | Doppelspurband |
| 6.2 | Tragkonstruktion |
| 6.3 | Antriebsstation |
| 6.4 | Abstand |
| 6.5 | Längsschlitz |
| 6.6 | Führungsprofil |
| 6.7 | Überkopfführung |
| 6.8 | Seitenführungen |
| 6.9 | Einschnitt |
| 7 | Staustrecke |
| 8 | Eingriffstrecke |
| 9 | Beschleunigungsstrecke |
| 10 | Transportstrecke |

**Patentansprüche**

1. Vereinzelungsvorrichtung einer Prüfeinrichtung zur zerstörungsfreien physikalischen Prüfung übereinstimmender, zu einer Objektachse (1.1) rotationssymmetrischer Prüfobjekte (1) mit einer Bodenfläche (1.2), einer Deckfläche (1.3) und einer sich zwischen Bodenfläche (1.2) und Deckfläche (1.3) erstreckenden Mantelfläche (1.4), umfassend

   - eine Stetig-Förderanlage (2) mit mindestens einem Fördermittel, eingerichtet zum einreihigen Transportieren der Prüfobjekte (1) in einer Transportrichtung (2.2) in einer Transportebene (2.1), wobei in der Transportebene (2.1) in Transportrichtung (2.2) aufeinanderfolgend eine Staustrecke (7), eine Eingriffstrecke (8), eine Beschleunigungsstrecke (9) und eine Transportstrecke (10) angeordnet sind,
   - zwei Taschenräder (3.1, 3.2) mit mehreren gleichmäßig über den Umfang verteilten Taschen (3.4), die um Achsen (3.3) drehbar angeordnet sind,
   - einen Antrieb (4), der die Taschenräder (3.1, 3.2) in eine gegensinnige, synchrone Drehung um ihre Achsen (3.3) versetzt,
   - wobei die Eingriffstrecke (8) zwischen den beiden Taschenrädern (3.1, 3.2) verläuft und der Abstand zwischen den Achsen (3.3) der Taschenräder und der Abstand der Taschenräder (3.1, 3.2) zu der Transportebene (2.1) derart bestimmt wird, dass die Mantelfläche (1.4) jedes Prüfobjekts (1) an jeweils einer Tasche (3.4) der beiden Taschenräder (3.1,3.2) in der Eingriffstrecke (8) zur Anlage gelangt,

   **gekennzeichnet durch**

   - eine Steuerung zur Einstellung der Umdrehungsgeschwindigkeit der Taschenräder (3.1, 3.2) relativ zur Geschwindigkeit jedes Fördermittels der Stetig-Förderanlage (2), die derart eingerichet ist, dass die Transportgeschwindigkeit der Prüfobjekte (1) in der Stau - und Eingriffstrecke (7,8) geringer als die Transportgeschwindigkeit der Prüfobjekte (1) in der Beschleunigungs - und Transportstrecke (9, 10) ist,
   - die Steuerung zur Einstellung der Umdrehungsgeschwindigkeit der Taschenräder (3.1, 3.2) relativ zur Geschwindigkeit jedes Fördermittels der Stetig-Förderanlage (2) Bestandteil eines Regelkreises ist, der die Aufrechterhaltung der Staustrecke (7) unmittelbar vor der Eingriffstrecke (8) gewährleistet,
- und einen Sensor, eingerichet zur Überwachung der Staustrecke (7) auf Lücken in dem Transportstrom der Prüfobjekte (1), wobei die Regelung, wenn eine Lücke detektiert wird, als Gegenmaßnahme mittels der Steuerung die Umdrehungsgeschwindigkeit der Taschenräder (3.1, 3.2) reduziert.

2. Vereinzelungsvorrichtung nach Anspruch 1, **dadurch gekennzeichnet, dass** die Stetig-Förderanlage einen Bandförderer (6) aufweist, wobei in der Transportebene (2.1) des Bandförderers (6) in Transportrichtung (2.2) hintereinander zumindest die Beschleunigungsstrecke (9) und die Transportstrecke (10) angeordnet sind.

3. Vereinzelungsvorrichtung nach Anspruch 1, **dadurch gekennzeichnet, dass** die Stetig-Förderanlage einen Bandförderer (6) aufweist, wobei in der Transportebene (2.1) des Bandförderers (6) in Transportrichtung (2.2) hintereinander zumindest ein Teil der Staustrecke (7), die Eingriffstrecke (8), die Beschleunigungsstrecke (9) und die Transportstrecke (10) angeordnet sind.

4. Vereinzelungsvorrichtung nach Anspruch 2, **dadurch gekennzeichnet, dass** die Stetig-Förderanlage (2) einen Strömungsförderer (5) aufweist, wobei in der Transportebene (2.1) des Strömungsförderers in Transportrichtung (2.2) hintereinander die Staustrecke (7) und die Eingriffstrecke (8) angeordnet sind.

5. Vereinzelungsvorrichtung nach Anspruch 3, **dadurch gekennzeichnet, dass** die Stetig-Förderanlage (2) einen Strömungsförderer (5) aufweist, wobei in der Transportebene (2.1) des Strömungsförderers (5) ein Teil der Staustrecke (7) angeordnet ist.

6. Vereinzelungsvorrichtung nach einem der Ansprüche 1 bis 5, **dadurch gekennzeichnet, dass** der Bandförderer (6) ein Doppelspurband (6.1) aufweist.

7. Vereinzelungsvorrichtung nach einem der Ansprüche 1 bis 6, **dadurch gekennzeichnet, dass** in Transportrichtung (2.2) verlaufende Seitenführungen (5.2, 6.8) parallel zueinander oberhalb der Transportebene (2.1) derart angeordnet sind, dass die Seitenführungen jedes Prüfobjekts (1) an gegenüberliegenden Seiten seiner Mantelfläche (1.4) führen.

8. Vereinzelungsvorrichtung nach Anspruch 7, **dadurch gekennzeichnet, dass** sich die Seitenführungen (5.2, 6.8) zumindest entlang der Staustrecke (7) erstrecken.

9. Vereinzelungsvorrichtung nach Anspruch 7 oder 8, **dadurch gekennzeichnet, dass** die Seitenführungen (6.8) entlang der Eingriffstrecke (8) oberhalb der Taschenräder (3.1, 3.2) angeordnet sind.

10. Vereinzelungsvorrichtung nach einem der Ansprüche 7 bis 9, **dadurch gekennzeichnet, dass** der Abstand zwischen den Seitenführungen (5.2, 6.8) einstellbar ist.

11. Vereinzelungsvorrichtung nach einem der Ansprüche 1 bis 10, **dadurch gekennzeichnet, dass** in Transportrichtung (2.2) oberhalb der Transportebene (2.1) eine Überkopfführung (6.7) derart angeordnet ist, dass die Überkopfführung (6.7) die Deckfläche (1.3) jedes Prüfobjekts (1) führt.

12. Vereinzelungsvorrichtung nach Anspruch 11, **dadurch gekennzeichnet, dass** sich die Überkopfführung (6.7) zumindest entlang der Eingriffstrecke (8) und ausgehend von der Eingriffstrecke (8) zumindest teilweise entlang der Beschleunigungsstrecke (9) erstreckt.

13. Vereinzelungsvorrichtung nach Anspruch 11 oder 12, **dadurch gekennzeichnet, dass** der Abstand zwischen der Überkopfführung (6.7) und der Transportebene (2.1) einstellbar ist.

14. Vereinzelungsvorrichtung nach einem der Ansprüche 1 bis 13, **dadurch gekennzeichnet, dass** der Bandförder (6) zumindest abschnittsweise als Vakuumbandförderer ausgebildet ist.

15. Vereinzelungsvorrichtung nach einem der Ansprüche 1 bis 14, **dadurch gekennzeichnet, dass** sämtliche Taschen (3.4) jedes Taschenrades (3.1, 3.2) durch einfach gekrümmte Flächen mit übereinstimmender Krümmung begrenzt werden.

16. Vereinzelungsvorrichtung nach einem der Ansprüche 1 bis 15, **dadurch gekennzeichnet, dass** der Antrieb (4) für die Taschenräder (3.1,3.2) einen Servomotor (4.1) umfasst.

17. Vereinzelungsvorrichtung nach einem der Ansprüche 1 bis 16, **dadurch gekennzeichnet, dass** der Abstand zwischen den Achsen (3.3) der Taschenräder (3.1, 3.2) einstellbar ist.

18. Vereinzelungsvorrichtung nach einem der Ansprüche 1 bis 17, **dadurch gekennzeichnet, dass** die beiden Taschenräder (3.1, 3.2) übereinstimmen und die Achsen (3.3) parallel zueinander und senkrecht zu der Transportebene (2.1) verlaufen.

**Claims**

1. A separating device of a testing unit for the nondestructive physical testing of corresponding test objects (1) that are rotationally symmetrical with respect to an object axis (1.1), having a bottom surface (1.2), a top surface (1.3), and a lateral surface (1.4) extending between the bottom surface (1.2) and the top surface (1.3), comprising

   - a continuous conveyor system (2) having at least one conveying means, set up for transporting the test objects (1) in a single row in a transport direction (2.2) in a transport plane (2.1), wherein an accumulation section (7), an engagement section (8), an acceleration section (9) and a transport section (10) are arranged in succession in the transport direction (2.2) in the transport plane (2.1),
   - two pocket wheels (3.1, 3.2) having a plurality of pockets (3.4) distributed uniformly over the circumference, which are arranged so as to be rotatable about axes (3.3),
   - a drive (4), which makes the pocket wheels (3.1, 3.2) rotate synchronously in opposite directions about their axes (3.3),
   - wherein the engagement section (8) extends between the two pocket wheels (3.1, 3.2), and the spacing between the axes (3.3) of the pocket wheels and the spacing of the pocket wheels (3.1, 3.2) from the transport plane (2.1) is determined in such a way that the lateral surface (1.4) of each test object (1) comes into contact with in each case one pocket (3.4) of the two pocket wheels (3.1, 3.2) in the engagement section (8),

   **characterized by**

   - a control system for adjusting the speed of rotation of the pocket wheels (3.1, 3.2) relative to the speed of each conveying means of the continuous conveyor system (2), which control system is set up in such a way that the transport speed of the test objects (1) in the accumulation and engagement section (7, 8) is lower than the transport speed of the test objects (1) in the acceleration and transport section (9, 10),
   - the control system for adjusting the speed of rotation of the pocket wheels (3.1, 3.2) relative to the speed of each conveying means of the continuous conveyor system (2) is part of a control circuit which ensures that the accumulation section (7) immediately ahead of the engagement section (8) is maintained,
   - and a sensor, designed for monitoring the accumulation section (7) for gaps in the transport flow of the test objects (1), wherein, if a gap is detected, the controller, as a countermeasure, reduces the speed of rotation of the pocket wheels (3.1, 3.2) by means of the control system.

2. The separating device as claimed in claim 1, **characterized in that** the continuous conveyor system has a belt conveyor (6), wherein at least the acceleration section (9) and the transport section (10) are arranged in succession in the transport direction (2.2) in the transport plane (2.1) of the belt conveyor (6).

3. The separating device as claimed in claim 1, **characterized in that** the continuous conveyor system has a belt conveyor (6), wherein at least a part of the accumulation section (7), the engagement section (8), the acceleration section (9) and the transport section (10) are arranged in succession in the transport direction (2.2) in the transport plane (2.1) of the belt conveyor (6).

4. The separating device as claimed in claim 2, **characterized in that** the continuous conveyor system (2) has a flow conveyor (5), wherein the accumulation section (7) and the engagement section (8) are arranged in succession in the transport direction (2.2) in the transport plane (2.1) of the flow conveyor.

5. The separating device as claimed in claim 3, **characterized in that** the continuous conveyor system (2) has a flow conveyor (5), wherein a part of the accumulation section (7) is arranged in the transport plane (2.1) of the flow conveyor (5).

6. The separating device as claimed in any of claims 1 to 5, **characterized in that** the belt conveyor (6) has a double track belt (6.1).

7. The separating device as claimed in any of claims 1 to 6, **characterized in that** lateral guides (5.2, 6.8) extending in the transport direction (2.2) are arranged parallel to one another above the transport plane (2.1) in such a way that the lateral guides guide each test object (1) on opposite sides of its lateral surface (1.4).

8. The separating device as claimed in claim 7, **characterized in that** the lateral guides (5.2, 6.8) extend at least along the accumulation section (7).

9. The separating device as claimed in claim 7 or 8, **characterized in that** the lateral guides (6.8) are arranged along the engagement section (8) above the pocket wheels (3.1, 3.2).

10. The separating device as claimed in any of claims 7 to 9, **characterized in that** the spacing between the lateral guides (5.2, 6.8) is adjustable.

11. The separating device as claimed in any of claims 1 to 10, **characterized in that** an overhead guide (6.7) is arranged in the transport direction (2.2) above the transport plane (2.1) in such a way that the overhead guide (6.7) guides the top surface (1.3) of each test object (1).

12. The separating device as claimed in claim 11, **characterized in that** the overhead guide (6.7) extends at least along the engagement section (8) and, starting from the engagement section (8), at least partially along the acceleration section (9).

13. The separating device as claimed in claim 11 or 12, **characterized in that** the spacing between the overhead guide (6.7) and the transport plane (2.1) is adjustable.

14. The separating device as claimed in any of claims 1 to 13, **characterized in that** the belt conveyor (6) is designed as a vacuum belt conveyor, at least in some section or sections.

15. The separating device as claimed in any of claims 1 to 14, **characterized in that** all the pockets (3.4) of each pocket wheel (3.1, 3.2) are bounded by simply curved surfaces having a corresponding curvature.

16. The separating device as claimed in any of claims 1 to 15, **characterized in that** the drive (4) for the pocket wheels (3.1, 3.2) comprises a servomotor (4.1).

17. The separating device as claimed in any of claims 1 to 16, **characterized in that** the spacing between the axes (3.3) of the pocket wheels (3.1, 3.2) is adjustable.

18. The separating device as claimed in any of claims 1 to 17, **characterized in that** the two pocket wheels (3.1, 3.2) coincide and the axes (3.3) extend parallel to one another and perpendicular to the transport plane (2.1) .

**Revendications**

1. Dispositif de désappariement d'un équipement d'essai, destiné à tester physiquement de manière non destructive des objets (1) à tester concordants, symétriques en rotation par rapport à un axe (1.1) d'objet, pourvu d'une surface (1.2) de fond inférieur, d'une surface (1.3) de recouvrement et d'une surface (1.4) d'enveloppe, s'étendant entre la surface (1.2) de fond inférieur et la surface (1.3) de recouvrement, comprenant

   - un convoyeur continu (2), pourvu d'au moins un moyen de convoyage, configuré pour le transport sur une rangée des objets (1) à tester dans une direction de transport (2.2) dans un plan de transport (2.1), dans le plan de transport (2.1) étant placés successivement dans la direction de transport (2.2) un trajet d'accumulation (7), un trajet d'intervention (8), un trajet d'accélération (9) et un trajet de transport (10),
   - deux roues à poches (3.1, 3.2), pourvues de plusieurs poches (3.4) régulièrement distribuées sur la circonférence, qui sont placées en étant rotatives autour d'axes (3.3),
   - un entraînement (4), qui amène les roues à poches (3.1, 3.2) dans une rotation synchrone à contresens autour de leurs axes (3.3),

- le trajet d'intervention (8) s'écoulant entre les deux roues à poches (3.1, 3.2) et l'écart entre les axes (3.3) des roues à poches et l'écart des roues à poches (3.1, 3.2) par rapport au plan de transport (2.1) étant déterminés de telle sorte que la surface (1.4) d'enveloppe de chaque objet (1) à tester vienne s'appliquer sur chaque fois une poche (3.4) des deux roues à poches (3.1,3.2) dans le trajet d'intervention (8),

**caractérisé par**

- un système de commande, destiné à régler la vitesse de rotation des roues à poches (3.1, 3.2) par rapport à la vitesse de chaque moyen de convoyage du convoyeur continu (2), qui est configuré de telle sorte, que la vitesse de transport des objets (1) à tester dans le trajet d'accumulation et le trajet d'intervention (7,8) soit inférieure à la vitesse de transport des objets (1) à tester dans le trajet d'accélération et le trajet de transport (9, 10),
- pour régler la vitesse de rotation des roues à poches (3.1, 3.2) par rapport à la vitesse de chaque moyen de convoyage du convoyeur continu (2), le système de commande est un composant d'un circuit de régulation, qui assure le maintien du trajet d'accumulation (7) directement à l'avant du trajet d'intervention (8),
- et un capteur, configuré pour superviser le trajet d'accumulation (7) au niveau de lacunes dans le flux de transport des objets (1) à tester, lorsqu'une lacune est détectée, à titre de contre-mesure, la régulation réduisant au moyen du système de commande la vitesse de rotation des roues à poches (3.1, 3.2).

2. Dispositif de désappariement selon la revendication 1, **caractérisé en ce que** le convoyeur continu comporte un convoyeur à bande (6), dans le plan de transport (2.1) du convoyeur à bande (6) étant placés l'un derrière l'autre dans la direction de transport (2.2) au moins le trajet d'accélération (9) et le trajet de transport (10) .

3. Dispositif de désappariement selon la revendication 1, **caractérisé en ce que** le convoyeur continu comporte un convoyeur à bande (6), dans le plan de transport (2.1) du convoyeur à bande (6) étant placés l'un derrière l'autre dans la direction de transport (2.2) au moins une partie du trajet d'accumulation (7), le trajet d'intervention (8), le trajet d'accélération (9) et le trajet de transport (10).

4. Dispositif de désappariement selon la revendication 2, **caractérisé en ce que** le convoyeur continu (2) comporte un convoyeur de flux (5), dans le plan de transport (2.1) du convoyeur de flux étant placés l'un derrière l'autre dans la direction de transport (2.2) le trajet d'accumulation (7) et le trajet d'intervention (8).

5. Dispositif de désappariement selon la revendication 3, **caractérisé en ce que** le convoyeur continu (2) comporte un convoyeur de flux (5), dans le plan de transport (2.1) du convoyeur de flux (5) étant placée une partie du trajet d'accumulation (7).

6. Dispositif de désappariement selon l'une quelconque des revendications 1 à 5, **caractérisé en ce que** le convoyeur à bande (6) comporte un bande (6.1) à double voie.

7. Dispositif de désappariement selon l'une quelconque des revendications 1 à 6, **caractérisé en ce que** des guidages latéraux (5.2, 6.8) s'écoulant dans la direction de transport (2.2) sont placés à la parallèle les uns des autres au-dessus du plan de transport (2.1), de telle sorte que les guidages latéraux de chaque objet (1) à tester guident sur des côtés opposés de sa surface (1.4) d'enveloppe.

8. Dispositif de désappariement selon la revendication 7, **caractérisé en ce que** les guidages latéraux (5.2, 6.8) s'étendent au moins le long du trajet d'accumulation (7) .

9. Dispositif de désappariement selon la revendication 7 ou 8, **caractérisé en ce que** les guidages latéraux (6.8) sont placés le long du trajet d'intervention (8), au-dessus des roues à poches (3.1, 3.2).

10. Dispositif de désappariement selon l'une quelconque des revendications 7 à 9, **caractérisé en ce que** l'écart entre les guidages latéraux (5.2, 6.8) est réglable.

11. Dispositif de désappariement selon l'une quelconque des revendications 1 à 10, **caractérisé en ce que** dans la direction de transport (2.2), au-dessus du plan de transport (2.1), un guidage en hauteur (6.7) est placé de telle sorte que le guidage en hauteur (6.7) guide la surface (1.3) de recouvrement de chaque objet (1) à tester.

12. Dispositif de désappariement selon la revendication 11, **caractérisé en ce que** le guidage en hauteur (6.7) s'étend au moins le long du trajet d'intervention (8) et à partir du trajet d'intervention (8), au moins en partie le long du trajet d'accélération (9).

13. Dispositif de désappariement selon la revendication 11 ou 12, **caractérisé en ce que** l'écart entre le guidage en hauteur (6.7) et le plan de transport (2.1) est réglable.

14. Dispositif de désappariement selon l'une quelconque des revendications 1 à 13, **caractérisé en ce que** le convoyeur à bande (6) est au moins conçu par tronçons sous la forme d'un convoyeur à bande par le vide.

15. Dispositif de désappariement selon l'une quelconque des revendications 1 à 14, **caractérisé en ce que** toutes les poches (3.4) de chaque roue à poches (3.1, 3.2) sont délimitées par des surfaces simplement recourbées, d'une courbure concordante.

16. Dispositif de désappariement selon l'une quelconque des revendications 1 à 15, **caractérisé en ce que** l'entraînement (4) pour les roues à poches (3.1,3.2) comprend un servomoteur (4.1).

17. Dispositif de désappariement selon l'une quelconque des revendications 1 à 16, **caractérisé en ce que** l'écart entre les axes (3.3) des roues à poches (3.1, 3.2) est réglable.

18. Dispositif de désappariement selon l'une quelconque des revendications 1 à 17, **caractérisé en ce que** les deux roues à poches (3.1, 3.2) concordent et les axes (3.3) s'écoulent à la parallèle les uns des autres et à la perpendiculaire du plan de transport (2.1).

Figur 1

EP 3 883 870 B1

Figur 2

EP 3 883 870 B1

Figur 3

**IN DER BESCHREIBUNG AUFGEFÜHRTE DOKUMENTE**

**In der Beschreibung aufgeführte Patentdokumente**

- DE 102013014473 A1
- US 4044891 A
- DE 3427379 A1
- US 4274532 A
- US 2018100824 A1